# EUROPEAN PATENT APPLICATION

(11) **EP 4 699 776 A1**
(43) Date of publication of application: **25.02.2026**
(21) Application number: 25191704.3
(22) Date of filing: 24.07.2025
(51) Int. Cl.: B29C 45/14, A47B 91/00, B29L 31/44

(54) **PROCESS AND MACHINE FOR MAKING AN ABUTMENT FOOT FOR FURNISHING ELEMENTS**

(30) Priority: 25.07.2024 IT 202400017311
(71) Applicant: ITALFELTRI S.r.l., 35020 Ponte san Nicolò (PD) (IT)
(72) Inventor: COSTOLA, Fausto, 35030 Saccolongo (PD) (IT); BORSATO, Henry, 35020 Ponte San Nicolo' (PD) (IT)
(74) Representative: Gallo, Luca

(57) **Abstract**

Process for making an abutment foot (1) for furnishing elements, which provides for a step of placing a plate-like element (11a) made of felt at at least one concave first surface (20) of a first half-mold (2), and a step of deformation of the plate-like element (11a) by cold-pressing with a second half-mold (3) having at least one convex second surface (30), in order to form a concave element (11b) made of felt.

The process further provides for a step of opening the first half-mold (2) and the second half-mold (3), keeping the concave element (11b) inside the first half-mold (2), and a co-molding step, in which a third half-mold (4) is closed against the first half-mold (2) in order to define a molding cavity (5) between the concave element (11b) and a shaped third surface (40) of the third half-mold (4), and a molten polymer material is injected into the molding cavity (5) and allowed to solidify in order to form a support body (12) fixed to the concave element (11b). In particular, the support body (12) and the concave element (11b) form an abutment foot (1).

## Description

### Field of application

The present invention relates to a process and a machine for making an abutment foot for furnishing elements, according to the preamble of the respective independent claims. The process and machine in question are intended to be used for manufacturing an abutment foot, or tip, connectable to the end of a support leg of a furnishing element, such as a chair, a table, a sideboard, and the like, in order to reduce friction with the floor.

More in detail, the abutment foot obtained through the process and machine of the present invention allows to attenuate the noise caused by the sliding of the support leg against the floor when the furnishing element is not fully lifted during movement, as well as to absorb potential accidental impacts.

The invention therefore falls within the field of furniture, and more generally within the industrial sector of manufacturing abutment feet or tips for use in furnishing elements, regardless of the environment in which such elements are intended to be used.

### State of the art

Various furnishing elements provided with support legs are known in the field, such as chairs, stools, tables, sideboards, and the like, which are often intended to be moved with respect to the floor, or the flooring, either to enable their use (the most common example being chairs) or to change their position within a room.

In particular, during movement, if such furnishing elements are not properly lifted, they tend to slide along the floor, often causing unpleasant noise, making the movement more difficult, as well as risking damaging the flooring itself.

To reduce such issues of inconvenience and noise, it is known to apply felt plate-like elements (commonly referred to as "felt pads") to the ends of the support legs resting on the floor.

**In** general, felt pads are flat, with a thickness of about 1 or 2 mm and a circular or square shape, and are provided with an adhesive surface to allow their attachment.

Furthermore, to improve the adhesion of such felt pads to support leg ends having particular shapes, abutment feet or tips are known in the field, which comprise a support body, generally made of polymer material, connected to the furnishing element, and a felt pad fixed to a lower surface of the support body.

**In** particular, the support body of the abutment foot may have an elongated shape in order to be inserted by interlocking into an end hole of the support leg of the furnishing element, or alternatively be shaped with a concave form to define a seat of engagement in which the end of the support leg is retained.

In both cases, abutment feet are generally manufactured by injection molding of the support body followed by adhesive bonding of the felt pad, or alternatively by co-molding the support body with the felt pad previously inserted into the mold.

Such abutment foot solutions have proven in practice not to be free of drawbacks.

The main drawback lies in the fact that these abutment feet are provided with felt pads of very limited thickness, and therefore they wear out easily and must be frequently replaced.

A further drawback lies in the fact that, in order to vary the dimensions of the abutment foot, it is necessary to completely redesign the molds used to manufacture, in particular, the support body, with a consequent increase in costs and processing times.

Another drawback lies in the fact that known abutment feet, which generally feature a flat felt base, run the risk, during dragging of the furnishing element, of one of their edges entering a floor joint or crack and getting stuck, making such operation more difficult.

Another drawback lies in the fact that known abutment feet can be used essentially only with support legs extending vertically. Alternatively, if one wishes to install them on oblique support legs, they must be specifically designed to include a bottom surface with a suitable inclination. However, in that case, they cannot be used with other types of support legs. Therefore, such abutment feet prove to be poorly versatile in practice. A further drawback lies in the fact that such abutment foot solutions are often impractical and not very pleasing from an aesthetic point of view. In particular, conventional abutment feet have a large contact surface with the floor, due to the need to use flat felt pads that remain firmly fixed to the support body. However, the shapes and sizes of current abutment feet do not allow for their use in all furnishing elements, especially in those requiring minimal components with reduced dimensions and more refined shapes, intended to enhance the aesthetic value of the finished furniture.

From patent FR 2777497, a machine is known for the production of abutment feet, which is provided with two half-molds between which a PTFE sheet is advanced. The half-molds are operable in sequence to close such that their first seats and corresponding protrusions form concavities on the PTFE sheet by means of hot pressing; to open so as to allow the PTFE sheet to advance and bring the concavities into correspondence with other second seats; and to close again to perform an overmolding operation in order to form a support body of the abutment foot to which the concavity of the PTFE sheet is attached. The process carried out by the machine described in this prior patent is, however, particularly lengthy because the half-molds, being designed to perform hot pressing, prevent the overmolded polymer material from solidifying quickly, and because the machine is designed to advance the PTFE sheet from the first seats for hot pressing to the second seats for overmolding, with the result that the PTFE sheet must be precisely positioned before performing the overmolding.

From patent US 2012/097818, a process is known for making an abutment foot, which provides for overmolding a support body onto a plate-like element made of felt, with the result that the leg of the furnishing element to which the thus obtained abutment foot is applied tends to get stuck in correspondence with floor joints and cracks.

From patent DE 202019102673, a process is known for making an abutment foot, which provides for applying a plate-like element made of leather to a support body, said element being intended to come into contact with the floor during use.

From patent DE 102006026063, a machine is known for making decorative elements, which provides for performing a hot pressing operation on a plate-like element, such as a fabric or a plastic film, in order to obtain a concave element, and then performing an overmolding operation in which a support is overmolded inside the concave element, without, however, said support having any portion protruding from the concave element.

### Presentation of the invention

In this context, the underlying problem of the present invention is therefore to overcome the drawbacks exhibited by known types of abutment feet, by providing a process and a machine for making an abutment foot for furnishing elements, which are versatile, namely capable of producing abutment feet with shapes and dimensions different from those already known, as well as adaptable to various production requirements.

A further object of the present invention is to provide a process and a machine for making an abutment foot for furnishing elements, which are simple and cost-effective to implement.

A further object of the present invention is to provide a process and a machine for making an abutment foot for furnishing elements, which allow the production of abutment feet with high durability and wear resistance.

A further object of the present invention is to provide a process and a machine for making an abutment foot for furnishing elements, which allow the reduction of the noise generated by the sliding of the abutment foot on the floor.

A further object of the present invention is to provide a process and a machine for making an abutment foot for furnishing elements, which allow the production of abutment feet with reduced dimensions.

A further object of the present invention is to provide a process and a machine for making an abutment foot for furnishing elements, which allow the production of abutment feet suitable also for use in furniture with a minimalist design.

### Brief description of the drawings

The technical features of the invention, according to the above-mentioned aims, are clearly identifiable from the content of the claims set out below, and the advantages thereof will become more apparent in the detailed description that follows, made with reference to the accompanying drawings, which illustrate an embodiment thereof provided solely by way of non-limiting example, in which:
- Figure 1a shows a perspective view of a first embodiment of an abutment foot for furnishing elements obtained through the process of the present invention;
- Figure 1b shows a side view of the abutment foot of Figure 1a;
- Figure 1c shows a sectional view of the abutment foot taken along direction I-I of Figure 1b;
- Figure 2a shows a perspective view of a second embodiment of an abutment foot for furnishing elements obtained through the process of the present invention;
- Figure 2b shows a side view of the abutment foot of Figure 2a;
- Figure 2c shows a sectional view of the abutment foot taken along direction II-II of Figure 2b;
- Figures 3a and 3b show a schematic representation of a step of deformation of the process according to the invention and of a deformation station of the machine according to the invention;

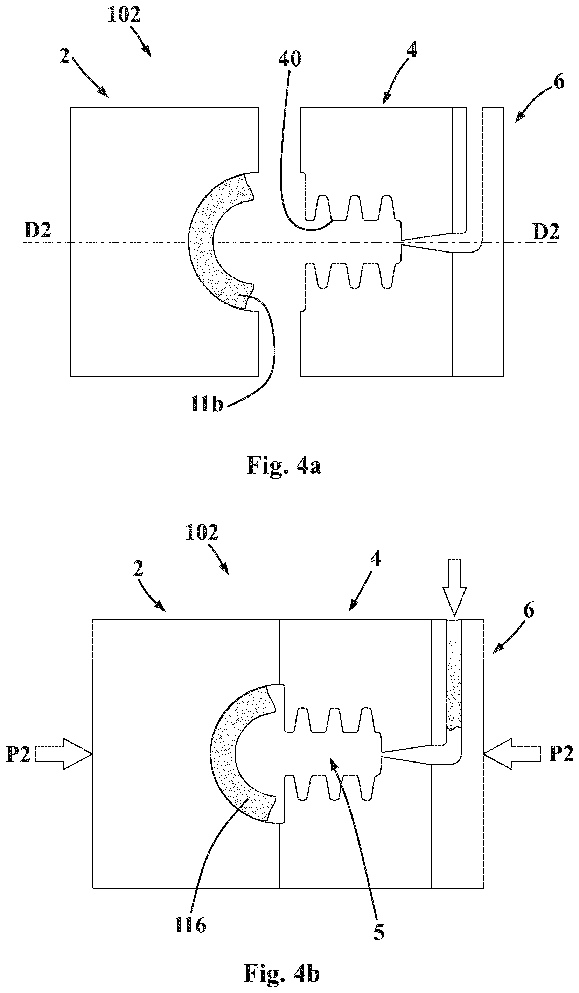

- Figures 4a and 4b show a schematic representation of a co-molding step of the process according to the invention and of a co-molding station of the machine according to the invention;
- Figure 5 shows a schematic representation of an extraction step of the process according to the invention;
- Figures 6a, 6b, and 6c show an overall schematic representation of the preferred embodiment of the machine according to the invention in different operating steps;
- Figure 7 shows an overall schematic representation of an alternative embodiment of the machine according to the invention.

### Detailed Description of a Preferred Embodiment

With reference to the accompanying drawings, an abutment foot for furnishing elements, generally indicated as 1, is shown, which can be manufactured using the process and the machine according to the present invention.

Such abutment foot 1 is intended to be mounted on a support leg of a furnishing element and to be placed in contact with the floor in order to reduce friction during movement. For example, the furnishing element may be a chair, a stool, a table, a sideboard, a sofa, and the like.

In particular, the abutment foot 1 comprises a support body 12, advantageously made of polymer material, preferably at least partially elastically deformable, which is intended to be fixed to the support leg of the furnishing element, and a concave element 11b made of felt, which is fixed to the support body 12 and is suitable for being placed at least partially in contact with the floor.

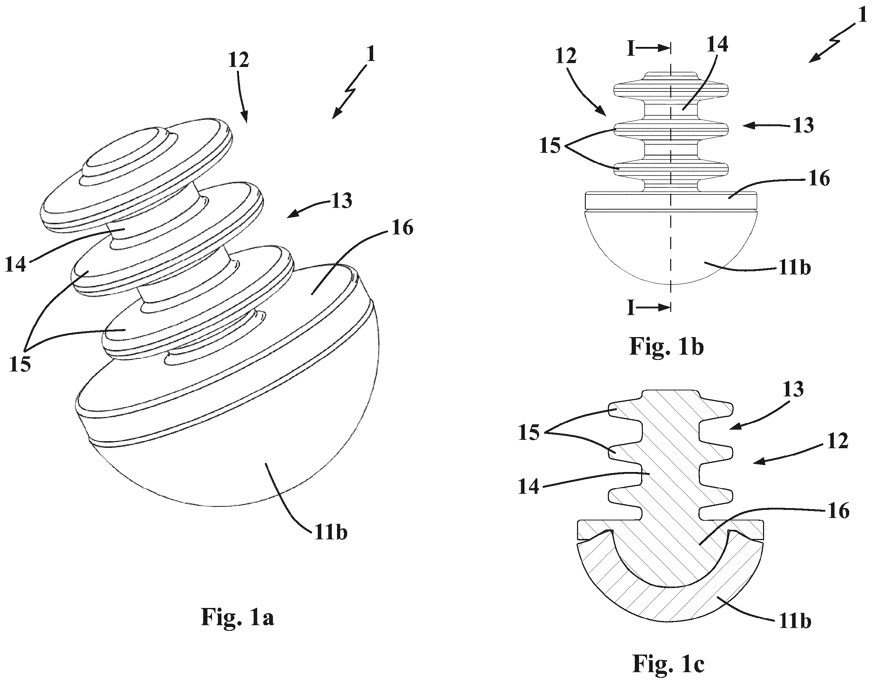

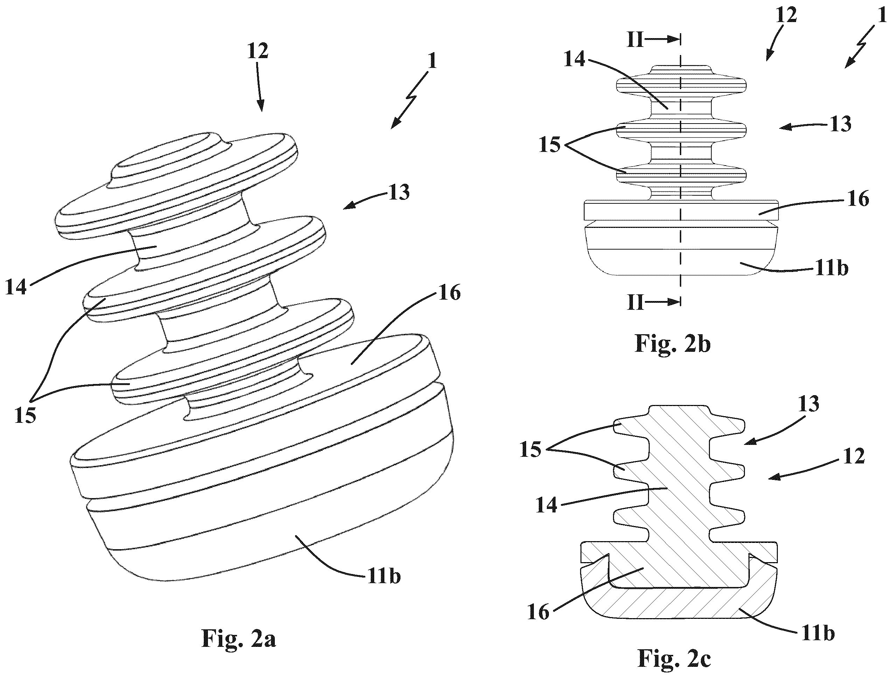

Advantageously, the support body 12 comprises an attachment portion 13 shaped to be fixed to the support leg of the furnishing element. In particular, according to a first and a second embodiment of the abutment foot 1, shown in the attached Figures 1a-c and 2a-c, the attachment portion 13 comprises an elongated stem 14 intended to be inserted by interlocking into an end hole of the support leg of the furnishing element. In this case, the attachment portion 13 may further comprise one or more engagement spokes 15 extending radially from the elongated stem 14 and intended to interfere with the internal surface of the support leg.

According to an alternative embodiment, not illustrated, the attachment portion 13 is shaped with a concave form and defines an engagement seat in which the end of the support leg of the furnishing element is intended to be retained.

Advantageously, the support body 12 also comprises a shaped portion 16 onto which the concave element 11b is fitted, in particular in a non-removable manner.

According to a first embodiment of the abutment foot 1, illustrated in Figures 1a-1c, the shaped portion 16, and consequently also the concave element 11b, has a substantially hemispherical shape.

This embodiment has the advantage of being usable both with support legs extending vertically and with support legs extending at any inclination.

According to a second embodiment of the abutment foot 1, illustrated in Figures 2a-2c, the shaped portion 16, and consequently also the concave element 11b, has a substantially truncated-conical shape with rounded edges, provided with a base face and a lateral face connected by a transition band.

Obviously, without departing from the scope of protection of the present invention, the shaped portion 16 and the concave element 11b may have any other shape, such as, for example, a cylindrical shape with rounded edges.

The shaped portion 16 of the support body 12 and the concave element 11b substantially form a lower portion of the abutment foot 1, intended to be placed at least partially in contact with the floor.

Both of the above-mentioned embodiments have the advantage that, during dragging of the furnishing element over a floor, the felt portion of the abutment foot 1 risks to get stuck in a joint or a crack. This advantage derives from the curvature of the concave element 11b (in the first embodiment along the entire surface, and in the second embodiment at the transition band).

According to the invention, the process for making an abutment foot 1 for furnishing elements initially provides for a step of arranging a plate-like element 11a made of felt. The felt used for the plate-like element 11a may be of any type, for example made of natural material, such as wool, or synthetic material, such as a polymer like polyester.

In particular, the plate-like element 11a is obtained from a large strip or sheet of felt. Therefore, the preparation step advantageously provides for unrolling and cutting the felt strip or sheet to the predefined size, for example by die-cutting.

Advantageously, the plate-like element 11a has a thickness comprised between 3 and 6 mm, preferably between 4 and 5 mm.

Advantageously, the plate-like element 11a also has a substantially circular shape and preferably a surface area equal to that of the lower portion of the abutment foot 1 to be obtained.

Obviously, without thereby departing from the scope of protection of the present invention, the plate-like element 11a may have any other desired shape.

The process according to the invention further comprises a step of placing the plate-like element 11a at at least one concave first surface 20 of a first half-mold 2. In particular, the first surface 20 of the first half-mold 2 has shapes and dimensions corresponding to the shape in which the lower portion of the abutment foot 1 is to be molded, being for example semispherical, truncated-conical, or cylindrical.

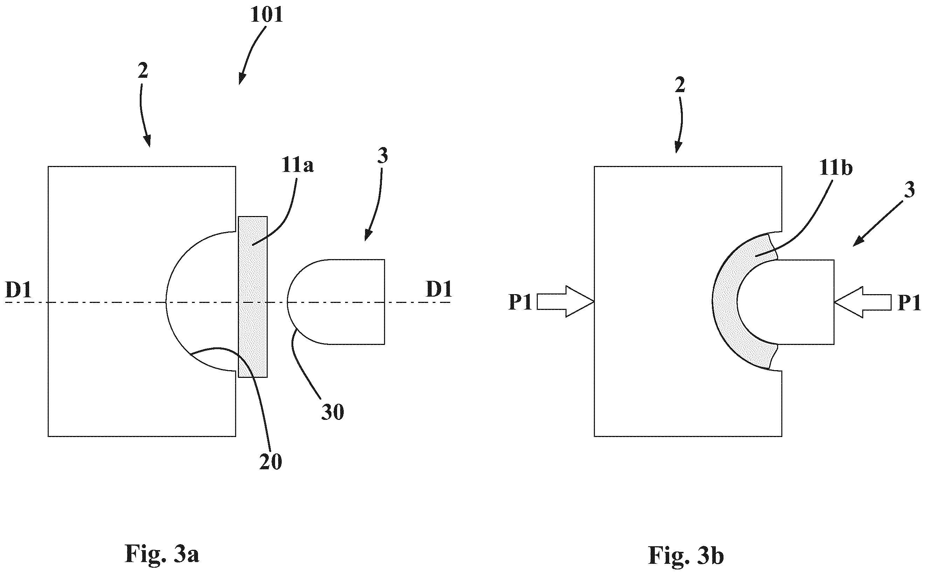

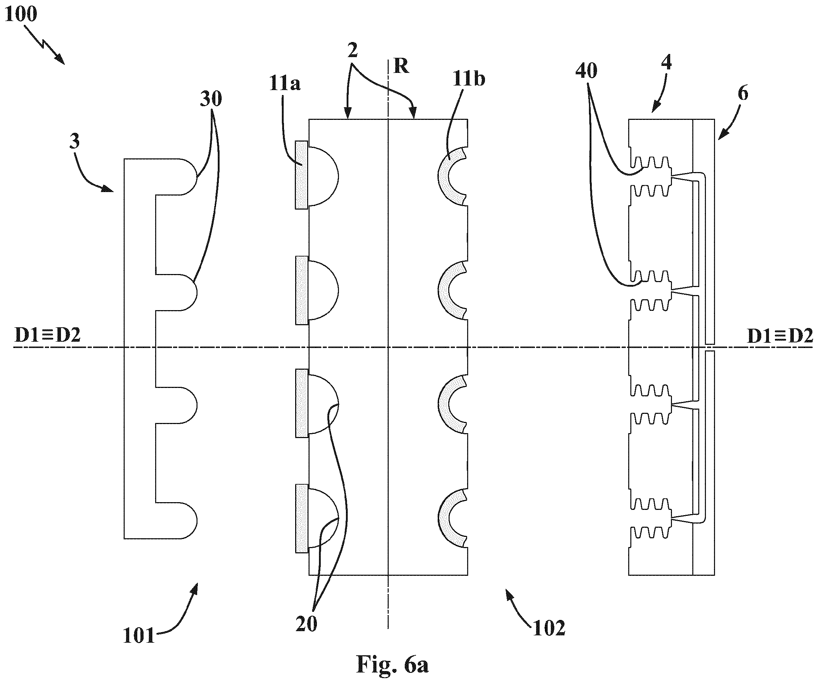

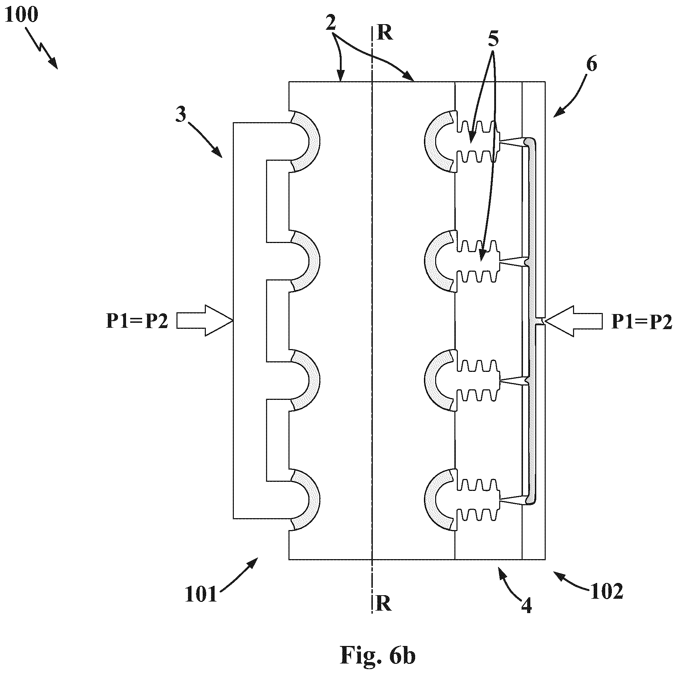

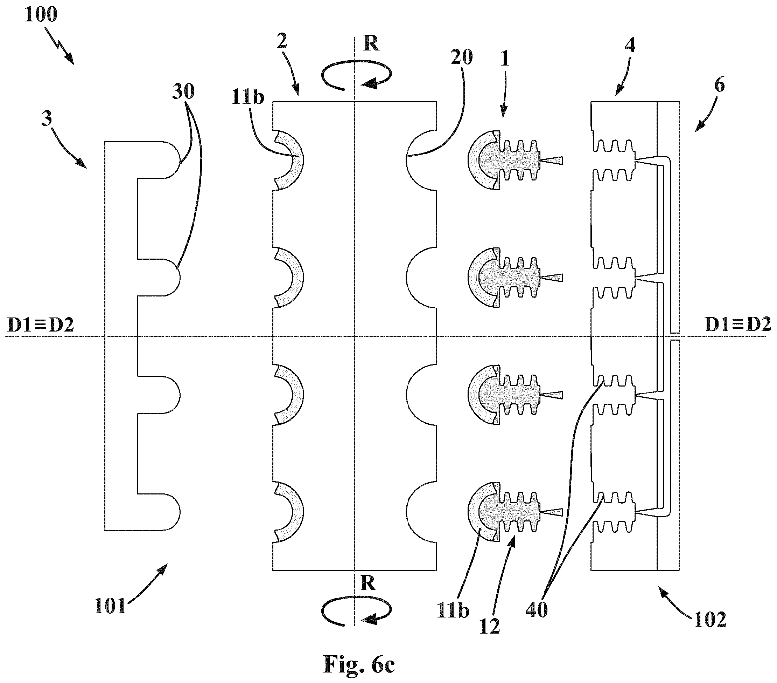

In particular, the placing step, as illustrated in Figures 3a and 6a, provides for placing the plate-like element 11a outside the first half-mold 2 but in proximity to the first surface 20. More specifically, the plate-like element 11a is placed adjacent to the edge of said first surface 20, in such a way that it can later be pushed into it during a subsequent step of deformation described below.

In this latter case, the plate-like element 11a is held in position by means of a positioning template (not illustrated).

Alternatively, the placing step may provide for inserting the plate-like element 11a at least partially inside the first half-mold 2 comprising the concave first surface 20. Therefore, advantageously, in this placing step, the plate-like element 11a comes into contact with the first surface 20 at most only to a limited extent, for example only perimetrally.

According to the invention, the process further comprises a step of deformation of the plate-like element 11a, in which the plate-like element 11a is cold-pressed by a second half-mold 3 having at least one convex second surface 30.

The expression "cold-pressed" is to be understood as meaning that this step is carried out at a temperature lower than the melting point of the felt (in case it is synthetic), or in any case at a temperature lower than the thermoforming temperature of the felt.

For example, the step of deformation is carried out at a temperature lower than or equal to 90 °C, preferably lower than 80 °C, more preferably lower than 70 °C.

Advantageously, during the step of deformation, the first half-mold 2 is maintained at a first temperature T1, preferably equal to the temperature at which the step of deformation is considered to be carried out, as indicated above (i.e., lower than the thermoforming temperature of the felt).

Advantageously, the second surface 30 of the second half-mold 3 is substantially counter-shaped with respect to the first surface 20 of the first half-mold 2, the second half-mold 3 being preferably made in the form of a punch.

Therefore, the step of deformation preferably provides substantially a cold punching operation.

During the step of deformation, the plate-like element 11a is brought, preferably completely, into abutment against the first surface 20 and shaped in order to form a concave element 11b made of felt.

In particular, the concave element 11b thus obtained already substantially has the shape it will take in the finished abutment foot 1.

Advantageously, in the step of deformation, the first half-mold 2 and the second half-mold 3 are closed with a first pressure P1, which is in particular sufficient to make the plate-like element 11a adhere to the first surface 20 and advantageously has at least a minimum value depending on the size and shape of the plate-like element 11a. According to the invention, the process further provides for a step of opening the first half-mold 2 and the second half-mold 3, with the concave element 11b maintained within said first half-mold 2 (in particular in contact with the first surface 20 of said first half-mold 2).

More specifically, during the preceding step of deformation, the plate-like element 11a is substantially elastically deformed, since in particular, as mentioned above, no type of thermoforming is performed that would permanently deform the plate-like element 11a.

Advantageously, in the step of opening the first half-mold 2 and the second half-mold 3, the concave element 11b remains in the first half-mold 2 at least partially via friction with the first surface 20. In particular, the concave element 11b remains at least temporarily joined to the first half-mold 2 as a result of the combination of the surface finish of the first half-mold 2 and the elastic return force of the felt following the deformation. In fact, the elastic return force advantageously causes the concave element 11b to press against the first surface 20, increasing the frictional force with the latter. Advantageously, the first surface 2 of the first half-mold 2 has a surface roughness greater than 1.5 µm, preferably greater than 3 µm. Obviously, the surface roughness of the first surface 2 may vary and depends on various operating parameters, such as, but not limited to, the shape and size of the first half-mold 2 and the first pressure P1 applied.

According to the concept underlying the present invention, the process further provides for a co-molding step, in which, with the concave element 11b within the first half-mold 2, a third half-mold 4 is closed against said first half-mold 2 in order to define at least one molding cavity 5 at least between the concave element 11b and at least one shaped third surface 40 of the third half-mold 4.

In particular, the third surface 40 of the third half-mold 4 has shapes and dimensions corresponding to the shape in which at least the attachment portion 13 of the abutment foot 1 is to be molded.

Furthermore, in the co-molding step, a molten polymer material is injected within the molding cavity 5 and allowed to solidify in order to form a support body 12 fixed to the concave element 11b.

In particular, as described above, the support body 12 and the concave element 11b form an abutment foot 1.

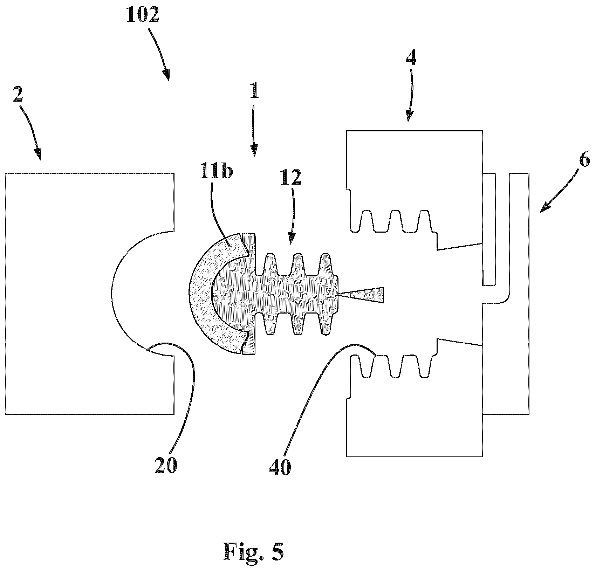

Advantageously, the process further comprises an extraction step, in which the first half-mold 2 and the third half-mold 4 are moved away from each other in order to extract the abutment foot 1. Obviously, depending on the shape of the third surface 40 and the possible presence of undercuts, the third half-mold 4 may advantageously be made of multiple parts separable from one another, so as to allow more easily the extraction of the abutment foot, as illustrated in Figure 5.

The process according to the invention allows an abutment foot 1 to be obtained quickly and easily, with improved wear resistance and mechanical strength.

Indeed, the use of a first half-mold 2 for both the deformation and the co-molding advantageously allows the process time to be optimized, since it is not necessary to remove the concave element 11b from the first half-mold 2 (which would in any case tend to return to its initial shape), nor is it necessary to provide an additional half-mold for the co-molding step. Moreover, by using two or more first half-molds alternating in the process steps, it is possible to achieve high productivity at low cost.

The process according to the invention also advantageously allows for the production of abutment feet 1 having a concave element 11b made of felt with a thickness greater than or equal to 3 mm, and therefore greater than the thickness of the felt element used in known abutment feet on the market (which usually have a felt element thickness of about 2 mm). In particular, this increased thickness allows the durability of the abutment foot 1 to be improved by reducing wear during use.

Furthermore, the process according to the invention is extremely versatile and makes it possible to obtain different embodiments of abutment feet 1, for example having support bodies 12 with the same shaped portion 16 (and therefore the same concave elements 11b) and different attachment portions 13, simply by changing the third half-mold 4 or by inserting appropriate inserts to modify its third surface 40.

This aspect can obviously also be implemented in an analogous manner to produce abutment feet 1 with support bodies 12 having the same attachment portion 13 and different shaped portions 16 (and therefore different concave elements 11b), simply by changing the first half-mold 2 and/or the second half-mold 3, or by inserting appropriate inserts to modify the first surface 20 and/or the second surface 30.

Advantageously, in the co-molding step, the first half-mold 2 is maintained at a second temperature T2. Preferably, the second temperature T2 is substantially equal to the first temperature T1.

In fact, it is not necessary to keep the first half-mold 2 at high temperatures, and indeed the lower temperature which is associated with cold deformation promotes faster solidification of the support body 12 of the abutment foot 1.

Differently, the third half-mold 4 may be heated to a temperature depending on the melting temperature of the polymer to be injected, in a manner known per se in the field of polymer molding.

Advantageously, in the co-molding step, the first half-mold 2 and the third half-mold 4 are closed with a second pressure P2, which in particular depends on the pressure required to prevent the polymer from leaking during the co-molding step, in a manner known per se in the field of polymer molding.

Advantageously, the first pressure P1 is substantially equal to the second pressure P2. Preferably, the value of the first pressure P1 and of the second pressure P2 is equal to the higher of the two required pressures (generally the second pressure P2 during the co-molding step).

In this case, it is possible to carry out the process using a single press on which all the half-molds 2, 3, 4 are mounted, for example as will be described in the preferred embodiment of the machine, which is also the subject of the invention and described below.

Advantageously, the process further comprises a finishing step, in which molded scrap parts are removed from the abutment foot 1, although such parts may be necessary for carrying out the process, such as for example sprues, or unwanted flash or trimmings. As previously mentioned, the invention also relates to a machine 100 for making an abutment foot 1 for furnishing elements, preferably intended to implement the method described above, with the same reference numerals being retained for greater clarity. Therefore, any features and advantages previously described may be considered to apply equally to the machine described below, and vice versa.

According to the invention, the machine 100 comprises a deformation station 101, which comprises at least one first half-mold 2 comprising at least one concave first surface 20, at which a plate-like element 11a made of felt is susceptible of being placed. For example, the first surface 20 may have a semispherical shape, or a substantially cylindrical or truncated-conical shape with rounded edges.

Furthermore, the deformation station 101 comprises at least one second half-mold 3, which comprises at least one convex second surface 30, advantageously counter-shaped with respect to the first surface 20, and is arranged for cold-forming the plate-like element 11a, bringing it into abutment against the first surface 20 and shaped for forming a concave element 11b made of felt.

Advantageously, the second half-mold 3 is substantially shaped as a punch.

The machine 100 according to the invention further comprises a co-molding station 102, which comprises the first half-mold 2, in particular shared with the deformation station 101.

The co-molding station 102 also comprises at least one third half-mold 4 comprising at least one shaped third surface 40 and configured to be closed against the first half-mold 2, thereby defining at least one molding cavity 5 at least between the first surface 20 of the first half-mold 2 and the third surface 40 of the third half-mold 4.

The co-molding station 102 further comprises an injection device 6, configured for injecting a molten polymer material within the molding cavity 5 in order to form a support body 12 fixed to the concave element 11b. In particular, as previously mentioned, the support body 12 and the concave element 11b form an abutment foot 1. According to the concept underlying the present invention, the first half-mold 2 is movable between the deformation station 101 and the co-molding station 102.

The machine 100 according to the invention therefore allows an abutment foot 1 to be produced in a simple and fast manner, since the use of a single first half-mold 2 for both the deformation and co-molding makes it possible to optimize the process time, without the need to remove the concave element 11b from the first half-mold 2 or to provide an additional half-mold for the co-molding step.

Furthermore, the machine according to the invention is extremely versatile and makes it possible to obtain different embodiments of abutment feet 1, for example with support bodies 12 having the same attachment portion 13 and different shaped portions 16 (and therefore different concave elements 11b), and vice versa, simply by changing only the first half-mold 2 and/or the second half-mold 3 and/or the third half-mold 4, or by inserting appropriate inserts to modify the first surface 20 and/or the second surface 30 and/or the third surface 40.

Advantageously, the machine may include additional stations, such as a loading station, for automatically picking up and inserting the plate-like elements 11a into the first half-mold 2.

According to the preferred embodiment of the invention, at least the deformation station and the co-molding station are integrated on the same supporting structure.

Advantageously, the second half-mold 3 of the deformation station 101 is movable along a pressing direction D1 between a rest position, in which it is spaced from the first half-mold 2, and a running position, in which it is brought close to the first half-mold 2. In particular, with the second half-mold 3 in the rest position, the plate-like element 11a is susceptible of being inserted into the first half-mold 2.

Advantageously, the third half-mold 4 of the co-molding station 102 is movable along a closure direction D2 between an open position, in which it is spaced from the first half-mold 2, and a closed position, in which it is brought close to the first half-mold 2, in particular to perform the injection of the polymer.

Advantageously, the first half-mold 2 is rotatable around a rotation axis R perpendicular to the pressing direction D1 and the closure direction D2.

Operationally, the first half-mold 2 rotates between the deformation station 101 and the co-molding station 102 when the second half-mold 3 is in the rest position and the third half-mold 4 is in the open position.

According to the preferred embodiment illustrated in the attached Figures 6a-c, the pressing direction D1 and the closure direction D2 coincide, and the first half-mold 2 is movable in rotation between the deformation station 101 and the co-molding station 102 by an angle of substantially 180°.

In this way, the same press can be used to close all the half-molds 2, 3, 4 in both stations. Furthermore, it is possible to provide two first half-molds 2 arranged in positions offset by 180° around the same rotation axis, so as to perform multiple operations simultaneously.

By using two or more first half-molds alternating in the process steps, it is therefore possible to achieve high productivity at low cost.

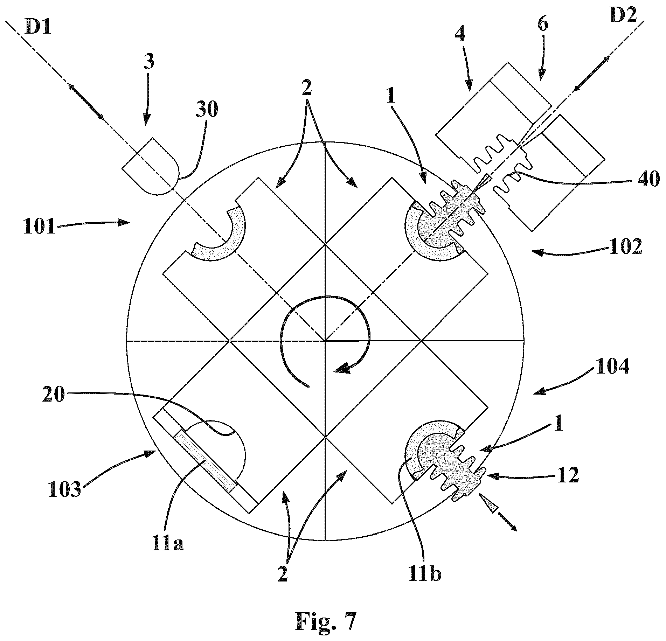

According to an alternative embodiment, illustrated in Figure 7, the pressing direction D1 and the closure direction D2 are placed angled from each other, and the first half-mold 2 is movable in rotation between the deformation station 101 and the co-molding station 102 by an angle comprised between 30° and 150°, preferably between 60° and 120°, for example 90°.

In this way, the supporting structure of the machine 100 comprises a rotary carousel capable of bringing the first half-mold 2 to the different stations. In such a case, this embodiment may be advantageous when more than two stations are provided, such as, in addition to the aforementioned ones, a loading station 103 for the plate-like elements 11a and/or a finishing station 104 (for removing sprues or possible machining scraps from the abutment foot 1).

Regardless of the embodiment described above, each half-mold 2, 3, 4 may advantageously comprise multiple surfaces 20, 30, 40, as illustrated in Figures 6a-c, so as to simultaneously produce multiple abutment feet 1 within the same station of the machine 100 or within the same step of the process.

In this way, the productivity of the process and/or of the machine 100 according to the invention can be further increased, thereby further reducing production costs.

The invention thus conceived therefore achieves the intended objects.

## Claims

1. Process for making an abutment foot (1) for furnishing elements, which provides for the following steps:
- a step of arranging a plate-like element (11a) made of felt;
- a step of placing said plate-like element (11a) at at least one concave first surface (20) of a first half-mold (2);
- a step of deformation of said plate-like element (11a), in which said plate-like element (11a) is cold-pressed by a second half-mold (3) having at least one convex second surface (30) and is brought into abutment against the first surface (20) and shaped to form a concave element (11b) made of felt;
- a step of opening said first half-mold (2) and said second half-mold (3), with said concave element (11b) maintained within said first half-mold (2);
- a co-molding step, in which:
- with said concave element (11b) within said first half-mold (2), a third half-mold (4) is closed against said first half-mold (2) to define at least one molding cavity (5) at least between said concave element (11b) and at least one third shaped surface (40) of said third half-mold (4), and
- a molten polymer material is injected within said molding cavity (5) and allowed to solidify to form a support body (12) fixed to said concave element (11b); said support body (12) and said concave element (11b) forming an abutment foot (1).

2. Process according to claim 1, **characterized in that**, in said step of deformation, said plate-like element (11a) is substantially elastically deformed and that, in said step of opening said first half-mold (2) and said second half-mold (3), said concave element (11b) remains in said first half-mold (2) at least partially via friction with said first surface (2).

3. Process according to claim 2, **characterized in that** the first surface (2) of said first half-mold (2) has a surface roughness greater than 1.5 µm, preferably greater than 3 µm.

4. Process according to any one of the preceding claims, **characterized in that** said plate-like element (11a) is provided with a thickness comprised between 3 and 6 mm, preferably between 4 and 5 mm.

5. Process according to any one of the preceding claims, **characterized in that** in said step of deformation said first half-mold (2) is maintained at a first temperature (T1) and in said co-molding step said first half-mold (2) is maintained at a second temperature (T2);
wherein said first temperature (T1) is substantially equal to said second temperature (T2).

6. Process according to any one of the preceding claims, **characterized in that** in said step of deformation, said first half-mold (2) and said second half-mold (3) are closed with a first pressure (P1) and in said co-molding step, said first half-mold (2) and said third half-mold (4) are closed with a second pressure (P2);
wherein said first pressure (P1) is substantially equal to said second pressure (P2).

7. Machine for making an abutment foot (1) for furnishing elements, which comprises:
- a deformation station (101), which comprises:
- at least one first half-mold (2), which comprises at least one concave first surface (20) at which a plate-like element (11a) made of felt is susceptible of being placed;
- at least one second half-mold (3), which comprises at least one convex second surface (30) and is arranged for cold-forming said plate-like element (11a), bringing it into abutment against the first surface (20) and shaped for forming a concave element (11b) made of felt;
- a co-molding station (102), which comprises:
- said first half-mold (2),
- at least one third half-mold (4) comprising at least one third surface (40) shaped and configured for being closed against said first half-mold (2), defining at least one molding cavity (5) at least between the first surface (20) of said first half-mold (2) and the third surface (40) of said third half-mold (4), and
- an injection device (6), configured for injecting a molten polymer material within said molding cavity (5) to form a support body (12) fixed to said concave element (11b); said support body (12) and said concave element (11b) forming an abutment foot (1);
wherein said first half-mold (2) is movable between said deformation station (101) and said co-molding station (102).

8. Machine according to claim 7, **characterized in that** the second half-mold (3) of said deformation station (101) is movable along a pressing direction (D1) between a rest position, in which it is spaced from said first half-mold (2), and a running position, in which it is brought close to said first half-mold (2);
the third half-mold (4) of said co-molding station (102) being movable along a closure direction (D2) between an open position, in which it is spaced from said first half-mold (2), and a closed position, in which it is brought close to said first half-mold (2); wherein said first half-mold (2) is rotatable around a rotation axis (R) perpendicular to said pressing direction (D1) and to said closure direction (D2).

9. Machine according to claim 8, **characterized in that** said pressing direction (D1) and said closure direction (D2) coincide and said first half-mold (2) is movable in rotation between said deformation station (101) and said co-molding station (102) by an angle of substantially 180°.

10. Machine according to claim 8, **characterized in that** said pressing direction (D1) and said closure direction (D2) are placed angled from each other and said first half-mold (2) is movable in rotation between said deformation station (101) and said co-molding station (102) by an angle comprised between 30 and 150°.
